(19) Europäisches Patentamt
European Patent Office
Office européen des brevets

(11) Veröffentlichungsnummer: **0 000 060**
**B1**

(12) **EUROPÄISCHE PATENTSCHRIFT**

(21) Anmeldenummer: **78100103.7**

(22) Anmeldetag: **06.06.78**

(51) Int. Cl.³: **C 07 C 69/96,**
C 08 G 65/32,
C 08 G 63/66

# (54) Verfahren zur Herstellung von Kohlensäure-bis-diphenol-estern von über Carbonat-Gruppen-verlängerten Polyalkylenoxiddiolen und ihre Verwendung zur Herstellung von hochmolekularen, segmentierten, thermoplastisch verarbeitbaren Polyäther-Polycarbonaten.

(30) Priorität: **11.06.77 DE 2726416**

(43) Veröffentlichungstag der Anmeldung:
**20.12.78 Patentblatt 78/01**

(45) Bekanntmachung des Hinweises auf die Patenterteilung:
**06.08.80 Patenblatt 80/16**

(84) Benannte Vertragsstaaten:
**DE FR GB**

(56) Entgegenhaltungen:
**DE - A - 2 650 533**

(73) Patentinhaber: **Bayer AG**
**Zentralbereich Patente,**
**Marken und Lizenzen**
**D - 5090 Leverkusen 1, Bayerwerk (DE)**

(72) Erfinder: **Schreckenberg, Manfred, Dr.**
**Doerperhofstrasse 15**
**D - 4150 Krefeld (DE)**
**Freitag, Dieter, Dr.**
**Hasenheide, 10**
**D - 4150 Krefeld 1 (DE)**
**Lindner, Christian, Dr.**
**Riehler Strasse 200**
**D - 5000 Köln 60 (DE)**
**Süling, Carlhans, Dr.**
**Carl-Leverkus-Strasse 10**
**D - 5068 Odenthal (DE)**
**Bartl, Herbert, Dr.**
**Eichendorffweg 10**
**D - 5068 Odenthal (DE)**
**König, Klaus, Dr.**
**Heymannstrasse 50**
**D - 5090 Leverkusen 1 (DE)**

**EP 0 000 060 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung von Kohlensäure-bis-diphenol-estern von über Carbonat-Gruppen-verlängerten Polyalkylenoxiddiolen und ihre Verwendung zur Herstellung von hochmolekularen, segmentierten, thermoplastisch verarbeitbaren Polyäther-Polycarbonaten.

Die DE—A 2 650 533 beansprucht ein Verfahren zur Hellstellung von Kohlensäurearylestern von über Carbonat-Gruppen-verlängerten Polyalkylenoxiddiolen aus Polyalkylenoxiddiolen mit $\overline{M}n$ über 135, vorzugsweise über 800, und Kohlensäurebisarylestern, das dadurch gekennzeichnet ist, dass man Polyalkylenoxiddiole mit Molekulargewichten $\overline{M}n$ über 135, bei Temperaturen zwischen 100°C und 200°C im Vakuum unterhalb 35 Torr zusammen mit Kohlensäure-bis-arylestern in Gegenwart von Katalysatoren erhitzt, wobei pro OH-Gruppe weniger als ein Mol Kohlensäure-bis-arylester eingesetzt wird, und die entstehende Hydroxylarylverbindung abdestilliert wird.

Als Polyalkylenoxiddiole sind insbesondere solche

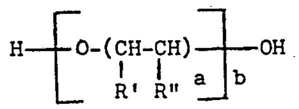

(I)

worin

R′ und R″ unabhängig voneinander H oder $C_1$—$C_4$-Alkyl sind,

a eine ganze Zahl von 1 bis 6 ist und

b eine ganze Zahl von 3 bis 350, insbesondere von 3 bis 250, ist, geeignet.

Gegenstand der vorliegenden Erfindung ist nun die Verwendung der gemäss der obengenannten DE—A 2 650 533 erhältlichen Kohlensäurearylester zur Herstellung von über Carbonat-Gruppen-verlängerten Polyalkylenoxiddiol-bis-diphenol-carbonaten; ein weiterer Gegenstand der vorliegenden Erfindung sind die erfindungsgemäss erhaltenen über Carbonat-Gruppen-verlängerten Polyalkylenoxiddiol-bis-diphenol-carbonate sowie deren Verwendung zur Herstellung von Polyäther-Polycarbonaten. Ein weiterer Gegenstand der vorliegenden Erfindung sind die erfindungsgemäss erhaltenen Polyäther-Polycarbonate mit einer verbesserten Phasentrennung zwischen Weichsegment und Hartsegment, die zu besseren anwendungstechnischen Eigenschaften der entsprechenden Polycarbonat-Elastomeren führt.

Die Umesterung der gemäss der DE—A 2 650 533 erhältlichen über Carbonat-Gruppen-verlängerten Polyalkylenoxiddiol-bis-arylcarbonate mit überschüssigen Diphenolen zu den entsprechenden über Carbonat-Gruppen-verlängerten Polyalkylenoxiddiol-bis-diphenol-carbonaten erfolgt überraschend glatt ohne Nebenreaktionen selbst bei Reaktionstemperaturen bis 200°C. Weder ändert sich die von den Ausgangsprodukten her gegebene molekulare Verteilung, noch erfolgt Rückbildung von Polyalkylenoxiddiolen, noch erfolgt Polykondensation zu Polycarbonaten.

Das erfindungsgemässe Verfahren ist dadurch gekennzeichnet, dass man über Carbonat-Gruppen-verlängerte Polyalkylenoxiddiol-bis-arylcarbonate, die gemäss der DE—A 2 650 533 dadurch erhältlich sind, das man Polyalkylenoxiddiole mit Molekulargewichten $\overline{M}n$ (Zahlenmittel) über 135, vorzugsweise über 800, mit Kohlensäure-bis-arylestern bei Temperaturen zwischen 100°C und 200°C, vorzugsweise zwischen 110°C und 180°C, in Vakuum unterhalb 35 Torr, vorzugsweise zwischen 25 Torr und 0,1 Torr, in Gegenwart von Katalysatoren erhitzt, wobei pro OH-Gruppe des Polyalkylenoxiddiols weniger als ein Mol Kohlensäure-bis-arylester eingesetzt wird, und die entstehende Hydroxyarylverbindung abdestilliert wird, mit Diphenolen bei Temperaturen zwischen 100°C und 200°C, vorzugsweise zwischen 110°C und 180°C im Vakuum unterhalb 35 Torr, vorzugsweise zwischen 25 Torr und 0,1 Torr, in Gegenwart von Katalysatoren erhitzt, wobei für eine Kohlensäurearylestergruppe des über Carbonat-Gruppen-verlängerten Polyalkylenoxiddiol-bis-arylcarbonates mehr als 1 Mol Diphenol, vorzugsweise zwischen 1,1 Mol und 2 Mol Diphenol, eingesetzt werden, und die entstehende Hydroxyarylverbindung abdestilliert wird.

Gegenstand der vorliegenden Erfindung sind somit über Carbonat-Gruppen-verlängerte Polyalkylenoxiddiol-bis-diphenol-carbonate, erhalten nach diesem erfindungsgemässen Verfahren.

Insbesondere werden die gemäss der DE—A 2 650 533 aus den Polyalkylenoxiddiolen der Formel I mit Kohlensäure-bis-arylestern der Formel II

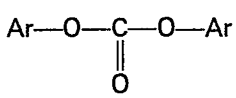

(II)

worin

Ar ein substituierter oder unsubstituierter Arylrest mit 6 bis 18 C-Atomen, vorzugsweise Phenyl ist, erhältlichen Polyalkylenoxiddiol-bis-arylcarbonate der Formel III

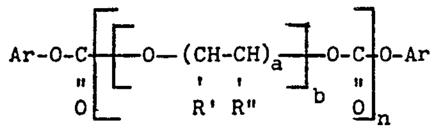 (III)

worin n eine ganze Zahl von 2 bis 20, vorzugsweise 2 bis 10, bedeutet,

Ar, R′, R″, a und b die für die Formel I und II genannte Bedeutung haben, mit den Diphenolen der folgenden Formel IV

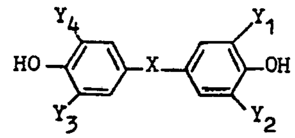 (IV)

worin X $—CH_2—$, 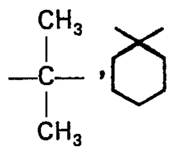 , O, S oder $SO_2$ bedeuten, und

$Y_1$ bis $Y_4$ gleich oder verschieden sind und Wasserstoff oder Halogen, wie beispielsweise Chlor oder Brom, bedeuten, zu den über Carbonat-Gruppen-verlängerten Polyalkylenoxiddiol-bis-diphenol-carbonaten der Formel V umgesetzt

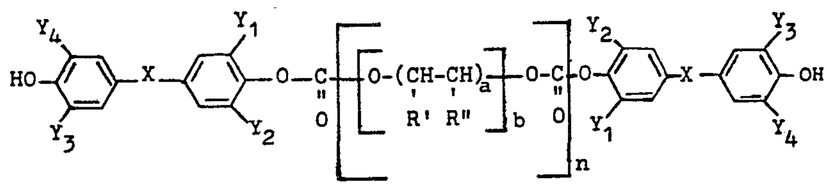 (V)

worin n,

R′, R″, a, b, X und Y1 die für die Formeln III und IV genannte Bedeutung haben.

Geeignete Katalysatoren für die erfindungsgemässe Herstellung der über Carbonat-Gruppen-verlängerten Polyalkylenoxiddiol-bis-diphenol-carbonate sind basische Umesterungskatalysatoren wie Alkali- oder Erdalkaliphenolate, Alkali- oder Erdalkalialkoholate, tertiäre Amine wie beispielsweise Triäthylendiamin, Morpholin, Pyrrolidin, Triäthylamin und Tributylamin und Pyridin oder Metallverbindungen wie beispielsweise Antimontrioxid, Zinkchlorid, Titantetrachlorid und Titansäuretetrabutylester.

Der Katalysator wird in Mengen zwischen 10 ppm und 200 ppm, bezogen auf das Gesamtgewicht des jeweils eingesetzten über Carbonat-Gruppen-verlängerten Polyalkylenoxiddiol-bis-arylcarbonats und des jeweils eingesetzten Diphenols, verwendet.

Diese Katalysatormengen können gegebenenfalls noch unterschritten werden, wenn die Ausgangsprodukte bei Verwendung der sauren Katalysatoren keine basischen Verunreinigungen, und bei Verwendung der basischen Katalysatoren keine sauren Verunreinigungen enthalten. Im Interesse einer möglichst geringen Eigenfarbe der erfindungsgemässen Produkte sind möglichst geringe Katalysatormengen zu bevorzugen.

Das erfindungsgemässe Verfahren zur Herstellung der über Carbonat-Gruppen-verlängerten Polyalkylenoxiddiol-bis-diphenol-carbonate erfolgt vorzugsweise in Abwesenheit von Lösungsmitteln für die Reaktanten, insbesondere in Substanz. Gegebenenfalls können unter den Reaktionsbedingungen inerte Lösungsmittel wie beispielsweise aliphatische Kohlenwasserstoffe, aromatische Kohlenwasserstoffe, die unsubstituiert oder beispielsweise durch Nitrogruppen substituiert sein können, eingesetzt werden.

Die Reaktionszeit für das Umesterungsverfahren zur Herstellung der über Carbonat-Gruppen-verlängerten Polyalkylenoxiddiol-bis-diphenol-carbonate beträgt in Abhängigkeit von Reaktionstemperatur sowie Art und Menge des Katalysators zwischen 1/2 und 24 Stunden.

Die Herstellung der über Carbonat-Gruppen-verlängerten Polyalkylenoxiddiol-bis-diphenol-carbonate erfolgt beispielsweise dadurch, dass man eine Mischung aus über Carbonat-Gruppen-verlängerten Polyalkylenoxiddiol-bis-phenyl-carbonat erhalten gemäss der deutschen Patentanmeldung P 2 650 533.9 (Le A 17 516) einem Diphenol und Katalysator im Vakuum auf Temperaturen zwischen 100°C und 200°C, vorzugsweise zwischen 110°C und 180°C, erhitzt und das mit fortschreitender Reaktion gebildete Phenol aus dem Reaktor abdestilliert. Hierbei wird das Diphenol im Überschuss eingesetzt, wobei pro Kohlensäurephenylestergruppe des Polyalkylenoxiddiol-bis-phenylcarbonats mehr als 1 Mol Diphenol, vorzugsweise zwischen 1,1 Mol und 2 mol Diphenol verwendet werden. Gemäss einer besonders bevorzugten Ausführungsform wird mit dem Dinatriumphenolat des Bisphenols A als Katalysator die Reaktion aus einem über Carbonat-Gruppen-verlängerten Polyalkylenoxiddiol-bis-phenyl-carbonat, erhalten gemäss DE—A 2 650 533, und Bisphenol A im Molverhältnis Bis-phenyl-carbonat zu Bisphenol A von 1:3 bei 150°C im Vakuum zwischen 25 und 0,1 Torr umgesetzt.

Die für die erfindungsgemässe Herstellung der über Carbonat-Gruppen-verlängerten Polyalkylenoxiddiol-bis-diphenol-carbonate notwendigen über Carbonat-Gruppen-verlängerten Polyalkylenoxiddiol-bis-arylcarbonate werden gemäss der DE—A 2 650 533 hergestellt.

Für die erfindungsgemäße Herstellung der über Carbonat-Gruppen-verlängerten Polyalkylenoxiddiol-bis-diphenol-carbonate geeignete Diphenol sind:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-äther
Bis-(hydroxyphenyl)-ketone
Bis-(hydroxyphenyl)-sulfone
$\alpha,\alpha$-Bis-(hydroxyphenyl)-diisopropylbenzole

sowie deren kernalkylierte und kernhalogenierte Verbindungen. Diese und weitere geeignete aromatische Dihydroxyverbindungen sind z.B. in den US-Patentschriften 3 028 365, 2 999 835, 3 148 172, 3 271 368, 2 991 273, 3 271 367, 3 280 078, 3 014 891 und 2 999 846 und in die deutschen Offenlegungsschriften 2 063 050, 2 211 957 aufgeführt.

Geeignete Diphenole sind beispielsweise
Bis-(4-hydroxyphenyl)-methan
4,4'-Dihydroxydiphenyl
2,4-Bis-(4-hydroxyphenyl)-2-methylbutan
$\alpha,\alpha$-Bis-(4-hydroxyphenyl)-p-diisopropylbenzol
2,2-Bis-(3,5-dimethyl-4-hydroxyphenyl)-propan.

Bevorzugte Diphenole sind beispielsweise
2,2-Bis-(4-hydroxyphenyl)-propan
1,1-Bis-(4-hydroxyphenyl)-cyclohexan
2,2-Bis-(3,5-dichlor-4-hydroxyphenyl)-propan und
2,2-Bis-(3,5-dibrom-4-hydroxyphenyl)-propan.

Die erfindungsgemäss geeigneten Diphenole können sowohl allein als auch zu mehreren eingesetzt werden.

Erfindungsgemässe über Carbonat-Gruppen-verlängerte Polyalkylenoxiddiol-bis-diphenol-carbonate sind somit beispielsweise die der Formeln Va—Vh:

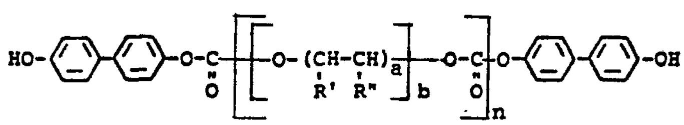
(Va)

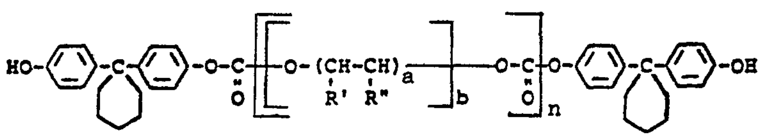
(Vb)

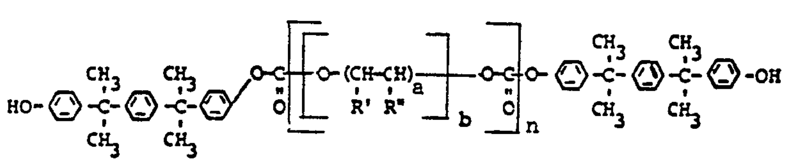
(Vc)

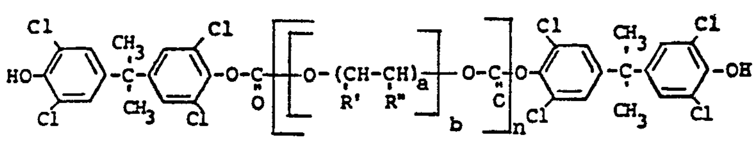
(Vd)

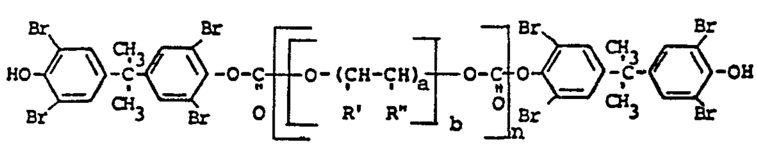
(Ve)

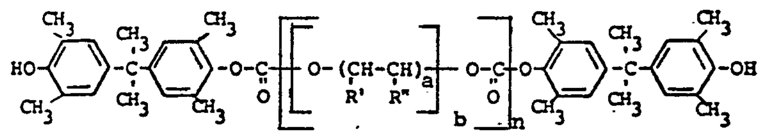

(Vf)

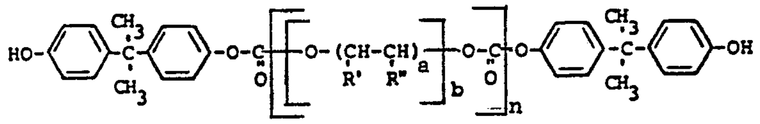

(Vg)

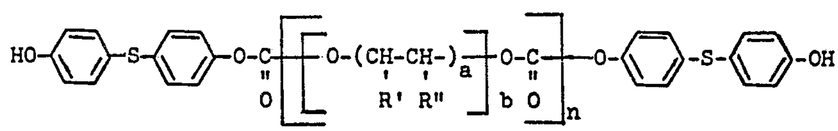

(Vh)

R′, R″, n, a und b Haben in den Formeln Va bis Vh die für die Formeln I bzw. III genannte Bedeutung.

Die erfindungsgemässen über Carbonat-Gruppen-verlängerten Polyalkylenoxiddiol-bis-diphenol-carbonate können als Ausgangsbisphenole bei der Herstellung für Polycarbonate nach dem bekannten Zweiphasengrenzflächenpolykondensationsverfahren eingesetzt werden. Man erhält so Polyäther-Polycarbonate eines bestimmten Aufbaus.

Das erfindungsgemässe Verfahren zur Herstellung dieser Polyäther-Polycarbonate ist dadurch gekennzeichnet, dass man die erfindungsgemässen über Carbonat-Gruppen-verlängerten Polyalkylenoxiddiol-bis-diphenol-carbonate, insbesondere die der Formel V, mit anderen Diphenolen, insbesondere mit denen der Formel IV, und mit Phosgen nach dem für die Polycarbonatherstellung bekannten Zweiphasengrenzflächenpolykondensationsverfahren bei pH-Werten zwischen 9 und 14 Temperaturen zwischen 0°C und 80°C, vorzugsweise zwischen 15°C und 40°C umsetzt. Die erfindungsgemäss erhaltenen Polyäther-Polycarbonate sind charakterisiert durch das Vorliegen einer amorphen (weichen) Polyätherphase und einer kristallinen (harten) Polycarbonatphase bzw. einer amorph-kristallinen (harten) Polycarbonatphase.

Morphologisch gesehen weisen die Polyäther-Polycarbonate zwei verschiedene, räumlich getrennte Phasen, d.h. Bereiche auf, die sich einer einer kontinuierlichen amorphen Polyätherphase und einer kristallinen bzw. amorph-kristallinen Polycarbonatphase zusammensetzen.

Die hochmolekularen, segmentierten, thermoplastisch verarbeitbaren Polyäther-Polycarbonate, hergestellt aus über Carbonat-gruppen-verlängerten Polyalkylenoxiddiol-bis-diphenol-carbonaten zeigen gegenüber anderen Polyäther-Polycarbonaten, beispielsweise auch denen der deutschen Offenlegungsschrift 2 636 784 zusätzliche Vorteil, wie z.B. eine noch bessere Phasentrennung, die zu besseren anwendungstechnischen Eigenschaften der entsprechenden Polyäther-Polycarbonate führt.

Die erfindungsgemässen Polyäther-Polycarbonate haben aufgrund ihrer Mehrphasigkeit eine bessere Wärmeformbeständigkeit als vergleichbare einphasige Polyäther-Polycarbonate.

Einphasige Polyäther-Polycarbonate sind beispielsweise in US-Patent 3 151 615 beschrieben. Sie sind nach verschiedenen Verfahren erhältlich, vorzugsweise jedoch nach dem von der Polycarbonatherstellung bekannten "Pyridinverfahren".

Die Herstellung von zweiphasigen Polymeren, beispielsweise von Polycarbonat-Polycaprolactonen, gelingt bislang nur mittels Bischlorameisensäureestern von Polycaprolactonen und Polycarbonat-Oligomeren (Siehe französische Patentschrift 2 235 965).

Entsprechendes gilt auch für die obwohl nicht als zweiphasig ausgewiesenen Polyäther-Polycarbonate der DE—B 1 162 559.

Die erfindungsgemässe Verwendung der erfindungsgemässen über Carbonat-Gruppen-verlängerten Polyalkylenoxiddiol-bis-diphenol-carbonate hat gegenüber der Verwendung von entsprechenden Bischlorameisensäureestern den Vorteil der Hydrolyseunempfindlichkeit und somit besseren Lagerfähigkeit und eindeutig bifunktionellen Reaktivität.

Die erfindungsgemässen Polyäther-Polycarbonate haben insbesondere aufgrund ihrer kristallinen Polycarbonatphase eine verbesserte Wärmeformbeständigkeit.

Das Erkennen der verschiedenen Phasen der erfindungsgemässen Polyäther-Polycarbonate gelingt mit Hilfe der Differentialthermoanalyse, wobei beispielsweise die Polyätherphase eine Einfriertemperatur <20°C aufweist, der amorphe Anteil bei der Polycarbonatphase eine Einfriertemperatur zwischen 100°C und 150°C hat und der kristalline Anteil der Polycarbonatphase einen Kristallitschmelzpunkt zwischen 170°C und 250°C besitzt.

Die hochmolekularen, segmentierten, thermoplastisch verarbeitbaren Polyäther-Polycarbonate, hergestellt nach dem erfindungsgemässen Verfahren, zeigen neben der besonderen termischen Belastbarkeit gute Transparenz, hochelastisches Verhalten und hervorragende Reißdenung von >400%.

Die für die erfindungsgemässe Herstellung der Polyäther-Polycarbonate aus den erfindungsgemässen über Carbonat-Gruppen-verlängerten Polyalkylenoxiddiol-bis-diphenol-carbonaten geeigneten anderen Diphenole sind die bereits für die Herstellung der über Carbonat-Gruppen-

verlängerten Polyalkylenoxiddiol-bis-diphenol-carbonate genannten, insbesondere die der Formel IV dieser Patentanmeldung; geeignet sind beispielsweise

4,4'-Dihydroxy-diphenyl
Bis-(4-hydroxyphenyl)-methan
2,4-Bis-(4-hydroxyphenyl)-2-methylbutan
$\alpha,\alpha$-Bis-(4-hydroxyphenyl)-p-diisopropylbenzol
2,2-Bis-(3-chlor-4-hydroxyphenyl)-propan
Bis-(hydroxyphenyl)-sulfid und
2,2-Bis-(3,5-dimethyl-4-hydroxyphenyl)-propan.

Vorzugsweise werden für die erfindungsgemässe Herstellung der Polyäther-Polycarbonate als andere Diphenole 2,2-Bis-(4-hydroxyphenyl)-propan, 2,2-Bis-(3,5-dichloro-4-hydroxyphenyl)-propan, 2,2-Bis-(3,5-dibrom-4-hydroxyphenyl)-propan und 1,1-Bis-(4-hydroxyphenyl)-cyclohexan verwendet. Es können auch beliebige Mischungen dieser anderen Diphenole eingesetzt werden.

Durch den Einbau geringer Mengen an tri- oder mehr als trifunktionellen Verbindungen, insbesondere solchen mit drei oder mehr als drei phenolischen Hydroxygruppen, vorzugsweise zwischen 0),05—2 Mol.-% (bezogen auf die eingesetzten Diphenole), erhält man verzweigte Produkte mit besserem Fließverhalten bei der Verarbeitung.

Als tri- bzw. mehr als trifunktionelle Verbindung sind beispielsweise geeignet:

Phloroglucin, 4,6 - Dimethyl - 2,4,6 - tri - (3 - hydroxyphenyl) - hepten - 2, 4,6 - Dimethyl - 2,4,6 - tri(4 - hydroxyphenyl) - heptan, 1,3,5 - Tri(4 - hydroxyphenyl) - benzol, 1,1,1 - Tri - (3 - hydroxyphenyl) - äthan, Tri - (4 - hydroxyphenyl) - phenylmethan, 2,2 - Bis - [4,4 - (4,4' - dihydroxyphenyl)cyclohexyl] - propan, 2,4, - Bis - (4 - hydroxyphenyl - isopropyl) - phenol, 2,6 - Bis - (2' - hydroxy - 5' - methyl - benzyl) - 4 - methyl - phenol, 2,4 - Dihydroxybenzoesäure, 2 - (4 - Hydroxyphenyl) - 2 - (2,4 - dihydroxyphenyl) - propan und 1,4 - Bis - (4',4'' - dihydroxytriphenyl - methyl) - benzol und 3,3 - Bis - (4 - hydroxyphenyl) - 2 - oxo - 2,3 - dihydroindol sowie 3,3 - Bis - (3 - methyl - 4 - hydroxyphenyl) - 2 - oxo - 2,3 - dihydroindol.

Die Verzweigung der erfindungsgemässen Polyäther-Polycarbonate kann auch über die Polyätherkomponente erfolgen, und zwar dadurch, dass man die gemäss DE—A 2 650 533 erhältlichen über Carbonat-Gruppen-verlängerten Kohlensäurearylester von Polyätherpolyolen mit drei oder vier Arylgruppen mit den vorstehend genannten Di-, Tri- und/oder Tetraphenolen zu entsprechenden Polyätherpolyolpoly-polyphenol-carbonaten entsprechend dem Verfahren der vorliegenden Erfindung umsetzt, und die so erhaltenen Polyphenole in molaren Mengen bis zu 50 Mol.-%, bezogen auf Mol eingesetzte Polyätherdiol-bis-diphenol-carbonate, bei der Polyäther-Polycarbonat-Synthese gemäss der vorliegenden Erfindung mitverwendet.

Die Kettenlänge der Polyäther-Polycarbonate kann durch Zugabe eines Kettenabbrechers, z.B. eine monofunktionellen Phenols wie Phenol, 2,6-Dimethylphenol, p-Bromophenol oder p-tert.-Butylphenol eingestellt werden, wobei pro Mol an eingesetztem Diphenol zwischen 0,1 und 10 Mol.-% Kettenabbrecher eingesetzt werden können.

Gegebenenfalls kann die Kettenlänge der Polyäther-Polycarbonate beispielweise durch Zugabe von Polyäthermonool-monodiphenol-carbonaten in molaren Mengen, bezogen auf Mole eingesetzten Carbonat-Gruppen-verlängerten Polyätherdiol-bis-diphenol-carbonaten, bis zu etwa 50 Mol.-% eingestellt werden.

Die erfindungsgemässe Herstellung der hochmolekularen, segmentierten, thermoplastisch verarbeitbaren Polyäther-Polycarbonate erfolgt nach dem Zweiphasengrenzflächen-Polykondensationsverfahren. Dazu werden eines der vorgenannten anderen Diphenole oder Gemische der vorgenannten anderen Diphenole in alkalischer wässriger Lösung gelöst. Ebenso werden die erfindungsgemässen über Carbonat-Gruppen-verlängerten Polyakylenoxiddiol-bis-diphenyol-carbonate, insbesondere die der Formel V, oder deren Gemische in einem mit Wasser nicht mischbaren inerten organischen Lösungsmittel gelöst und hinzugefügt. Dann wird bei einer Temperatur zwischen 0°C und 80°C, bevorzugt zwischen 15°C und 40°C und einem pH-Wert zwischen 9 und 14 Phosgen eingeleitet. Nach dem Phosgenieren erfolgt die Polykondensation durch Zugabe von 0,2—10 Mol.% tertiärem aliphatischem Amin, bezogen auf Mol Diphenol. Hierbei werden für die Phosgenierung Zeiten zwischen 5 Min. und 90 Min., für die Polykondensation Zeiten zwischen 3 Min. und 3 Stunden benötigt.

Gegenstand der vorliegenden Erfindung ist somit die Herstellung von Polyäther-Polycarbonaten, die dadurch gekennzeichnet ist, dass man die erfindungsgemässen über Carbonat-Gruppen-verlängerten Polyalkylenoxiddiol-bis-diphenol-carbonate, insbesondere die der Formel V, mit anderen Diphenolen, insbesondere denen der Formel IV, und mit Phosgen in einem Flüssigkeitsgemisch aus inertem organischen Lösungsmittel und alkalischer wäßriger Lösung bei Temperaturen zwischen 0°C und 80°C, vorzugsweise zwischen 15°C und 40°C, bei einem pH-Wert zwischen 9 und 14 umsetzt, und nach der Phosgenzugabe durch Zusatz von 0,2 Mol-% bis 10 Mol-% an tertiärem aliphatischem Amin, bezogen auf die Molmenge an Diphenol, polykondensiert, wobei das Gewichtsverhältnis von über Carbonat-Gruppen-verlängerten-Polyalkylenoxiddiol-bis-diphenolcarbonat zu anderem Diphenol von dem Polycarbonatanteil und dem Polyätheranteil der Polyäther-Polycarbonate bestimmt wird.

Gegenstand der vorliegenden Erfindung sind somit Polyäther-Polycarbonate erhalten nach diesem erfindungsgemässen Verfahren.

Die erhaltenen Lösungen der Polyäther-Polycarbonate in den organischen Lösungsmitteln werden analog den Lösungen der nach dem Zweiphasengrenzflächenverfahren hergestellten thermoplastischen Polycarbonate aufgearbeitet, wobei die Polyäther-Polycarbonate ausserdem nachbehandelt werden, und zwar werden sie etweder.

a) isoliert nach bekannten Verfahren, beispielsweise durch Ausfällen mit Methanol oder Äthanol, und anschliessend getrocknet und getempert, oder Scherkräften unterworfen oder in organischen Lösungsmitteln gelöst und gelieren lassen oder
b) bei der Isolierung beispielsweise im Ausdampfextruder bereits Scherkräften unterworfen, oder
c) vor der Isolierung in dem bei der Herstellung der Polyäther-Polycarbonate nach dem Zweiphasengrenzflächenverfahren verwendeten Lösungsmittel gelieren lassen.

Als inerte organische Lösungsmittel für das erfindungsgemässe Herstellungsverfahren der Polyäther-Polycarbonate sind mit Wasser nicht mischbare aliphatische Chlorkohlenwasserstoffe wie Methylenchlorid, Chloroform und 1,2-Dichloräthen, oder chlorierte Aromaten, wie Chlorbenzol, Dichlorbenzol und Chlortoluol oder Mischungen aus diesen Lösungsmitteln geeignet.

Als alkalisch wässrige Lösungen für das erfindungsgemässe Verfahren eignen sich Lösungen von Li OH, NaOH, KOH, $Ca(OH)_2$ und/oder $Ba(OH)_2$ in Wasser.

Als tertiäre aliphatische Amine für das erfindungsgemässe Verfahren sind solche mit 3 bis 15 C-Atomen geeignet, also beispielsweise Trimethylamin, Triäthylamin, n-Tripropylamin und n-Tributylamin und varriert je nach eingesetztem Diphenol zwischen 0,2—5 Mol-%, bei Einsatz von tetramethylsubstituierten Diphenolen zwischen 5—10 Mol-%, bezogen jeweils auf die Gesamtmolmenge an eingesetzten Diphenolen (= jeweilige Summe aus über Carbonat-Gruppen-verlängerten Polyalkylenoxiddiol-bis-diphenol-carbonaten und anderen Diphenolen).

Die nach dem erfindungsgemässen Verfahren hergestellten Polyäther-Polycarbonate können nach folgenden Verfahren isoliert werden:

a. Durch Abdestillieren des organischen Lösungsmittel bis zu einer bestimmten Konzentration, wobei eine hochprozentige (etwa 30—40 Gew.-%) Polymerlösung erhalten wird, beim anschliessenden langsamen Verdampfen des restlichen Lösungsmittels geliert das Polyäther-Polycarbonat.

b. Durch Fällen der Polyäther-Polycarbonate aus der organischen Phase mit organischen Lösungsmitteln, wobei zum Ausfällen sich beispielsweise Methanol, Äthanol, Isopropanol, Aceton, aliphatische Kohlenwasserstoffe und cycloaliphatische Kohlenwasserstoffe eignen.

c. Durch Isolierung der Polyäther-Polycarbonate im Ausdampfextruder, bei Temperaturen von etwa 160—240°C unter den für die Polycarbonatextrusion bekannten Bedingungen und unter Anwendung von Scherkräften.

Die Gelierung der nach dem erfindungsgemässen Verfahren hergestellten Polyäther-Polycarbonate, sei es ohne Isolierung in der aufgearbeiteten organische Phase des Zweiphasenreaktionsgemisches oder in separater Lösung der vorher isolierten Polyäther-Polycarbonate in organischen Lösungsmitteln, erfolgt durch Abkühlen der hochprozentigen Polymerlösung, wobei für die Gelierung je nach Polyäther- oder Polycarbonatanteil Zeiten zwischen 5 Min. und 12 Stunden bei Temperaturen zwischen 0°C und 40°C benötigt werden.

Das gelierte Produkt kann zu einem Pulverkorngemisch aufgearbeitet werden, wobei das erhaltene Polyäther-Polycarbonat 48 Stunden bei 50°C und 24 Stunden bei 100°C im Vakuum getrocknet wird.

Als Lösungsmittel für die separate Gelierung der isolierten Polyäther-Polycarbonate eignen sich organische Lösungsmittel wie beispielsweise Methylenchlorid, Benzol, Toluol oder Xylol.

Die Temperung der isolierten Polyäther-Polycarbonate erfolgt zwischen 5 Minuten und 24 Stunden bei Temperaturen zwischen 40°C und 170°C.

Die Einwirkung von Scherkräften auf die isolierten Polyäther-Polycarbonate erfolgt zwischen 0,5 und 30 Minuten, bei Temperaturen zwischen 130 und 240°C und unter Scherkräften zwischen 0,2 und 0,7 KWh pro kg Polymer. Die Phosgenmenge richtet sich nach dem eingesetzten Diphenol, der Rührwirkung und der Reaktionstemperatur, die zwischen etwa 0°C und etwa 80°C liegen kann, und beträgt im allgemeinen 1,1—3,0 Mol Phosgen pro Mol Diphenol.

Die erfindungsgemässe Umsetzung der erfindungsgemässen über Carbonat-Gruppen-verlängerten Polyalkylenoxiddiol-bis-diphenol-carbonate mit Diphenolen und mit Phosgen nach dem Zweiphasengrenzflächenverfahren erfolgt quantitativ; somit bestimmt sich das jeweilige Reaktantenverhältnis von über Carbonat-Gruppen-verlängerten Polyalkylenoxiddiol-bis-diphenol-carbonat zu anderem Diphenol aus dem Polycarbonatanteil und dem Polyätheranteil jeweils zu synthetisierenden Polyäther-Polycarbonate.

Der Polycarbonatanteil in den nach dem erfindungsgemässen Verfahren hergestellten Polyäther-Polycarbonaten liegt, je nach gewünschtem Eigenschaftsbild, etwa zwischen 30 und 95, vorzugsweise etwa zwischen 35 und 80 Gew.-%, wobei mit steigendem Polycarbonatanteil die Härte und Wärmeformbeständigkeit zunimmt und die Elastizität und Reißdehnung abnimmt.

Als Polycarbonatanteil der erfindungsgemässen Polyäther-Polycarbonate ist die Gewichtsmenge an aromatischen Polycarbonatstruktureinheiten der folgenden Formel VI

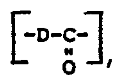

(VI)

worin D für die Diphenolat-Reste im Polyäther-Polycarbonat steht, insbesondere an aromatischen Polycarbonatstruktureinheiten der Formel IVa zu verstehen

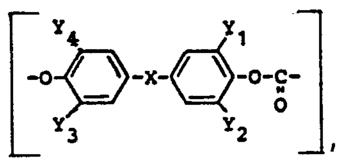

(IVa)

worin X und $Y_1$ bis $Y_4$ die für Formel IV genannte Bedeutung haben.

Als Polyätheranteil der erfindungsgemässen Polyäther-Polycarbonate ist demzufolge die Gewichtsmenge über Carbonat-Gruppen-verlängerten Polyalkylenoxiddiolat-Blockeinheiten, insbesondere solchen der Formel VII zu verstehen,

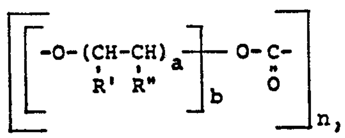

(VIII)

worin R', R'', a, b die für die Formel I gennante Bedeutung haben und n eine ganze Zahl von 2 bis 20, vorzugsweise 2—10, bedeutet.

Gegenstand der vorliegenden Erfindung sind somit auch Polyäther-Polycarbonate, die dadurch gekennzeichnet sind, dass sie etwa aus 30 bis 95 Gew.-%, vorzugsweise etwa aus 35 bis 80 Gew.-%, an aromatischen Polycarbonatstruktureinheiten der Formel VI, insbesondere solchen der formel IVa, und etwa aus 70 bis 5 Gew.-%, vorzugsweise etwa aus 65 bis 20 Gew.-% an über Carbonat-Gruppen-verlängerten Polyalkylenoxiddiolat-Blockeinheiten, insbesonderen solchen der Formel VII, bestehen.

Erfindungsgemässe Polyäther-Polycarbonate sind beispielsweise solche, die 30 bis 95 Gew.-%, vorzugsweise aus 35 bis 80 Gew.-% an Polycarbonatstrukureinheiten der Formel IVb bestehen

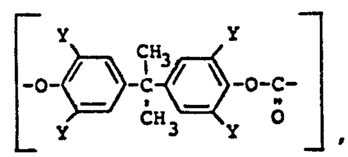

(IVb)

worin

Y H, Cl, Br oder $CH_3$ ist, und aus 70 bis 5 Gew.-%, vorzugsweise 65 bis 20 Gew.-% an über Carbonat-Gruppen-verlängerten Polyalkylenoxiddiolat-Blockeinheiten der Formel VII bestehen.

Die erfindungsgemässen Polyäther-Polycarbonate sollen mittlere Molekulargewichte $\overline{M}w$ (Gewichtsmittel) von 25000 bis 250000, vorzugsweise von 40000 bis 150000 haben, ermittelt nach der Lichtstreumethode mit dem Streulichtphotometer. Die relativen Lösungsviskositäten $\eta$ rel. (gemessen an 0,5 g in 100 ml $CH_2Cl_2$ bei 25°C) der erfindungsgemässen Polyäther-Polycarbonate liegen zwischen 1,3 und 3,0, vorzugsweise zwischen 1,4 und 2,6.

Die nach dem erfindungsgemässen Verfahren hergestellten hochmolekularen, segmentierten, thermoplastisch verarbeitbaren Polyäther-Polycarbonate sind dadurch gekennzeichnet, dass, gemessen mittels Differentialthermoanalyse der Polyätheranteil amorph vorliegt und eine Einfriertemperatur zwischen −100°C und +100°C, vorzugsweise zwischen −80°C und +20°C, hat, und dass der Polycarbonatanteil teilweise kristallin vorliegt mit einer Kristallitschmelztemperatur des kristallinen Polycarbonatanteils von mindestens 160°C, vorzugsweise zwischen 165°C und 250°C, und dass die Einfriertemperatur des amorphen Polycarbonatanteils über 80°C, vorzugsweise über 100°C liegt.

Diese Differenzierung der Einfriertemperatur des Polyätheranteils von der Einfriertemperatur sowie die Kristallitschmelztemperatur des Polycarbonatanteils ist charakteristisch für ein Vorliegen der Phasentrennung von Polyäther- und Polycarbonatanteil.

Die Teilkristallinität, nachweisbar durch eine meßbare Schmelzenthalpie des kristallinen Polycarbonatanteils der erfindungsgemässen Polyäther-Polycarbonate, die mindestens 1—8 cal/g Polymer beträgt, kann durch Reckung und durch das erwähnte nachträgliche Tempern (5 Min. bis 24 Stunden) bei 40—170°C oder durch die erwähnte Einwirkung von Scherkräften während der thermoplastischen

Verarbeitung in einem Mehrwellenextruder noch um 50% gesteigert werden, wobei die Wärmeformbeständigkeit der Produkte zunimmt, das Aussehen von transparent nach opak bis intransparent sich ändert.

Die teilkristallinen elastischen Polyäther-Polycarbonate können jeweils unterhalb oder im Bereich des Kristallitschmelzpunktes des kristallinen Polycarbonatanteils bei Temperaturen von 130°C bis max. 250°C thermoplastisch verarbeitet werden, wobei ein wesentlicher Anteil der Kristallinität nicht verloren geht. Bei Verarbeitungstemperaturen oberhalb des Kristallitschmelzpunktes des kristallinen Polycarbonatanteils erhält man amorphe, transparente Produkte.

Der kristalline Anteil des Polycarbonatanteils der erfindungsgemässen Polyäther-Polycarbonate kann somit variiert werden, wobei die Schmelzenthalpie des kristallinen Polycarbonatanteils, um eine für die Praxis gute Wärmeformbeständigkeit der Polyäther-Polycarbonate zu haben, bei etwa 1—8 cal/g Polymer, vorzugsweise bei 2,5—5,5 cal/g Polymer liegt.

Erfolgt die erfindungsgemässe Aufarbeitung und Isolierung der Polyäther-Polycarbonate ohne Temperung, ohne Gelierung und ohne Einwirkung von Scherkräften, so erhält man einphasige Polyäther-Polycarbonate, also solche Produkte mit nur einer mittels Differentialthermoanalyse meßbaren Einfriertemperatur.

Die UV-Stabilität und Hydrolysestabilität der erfindungsgemässen Polyäther-Polycarbonate kann verbessert werden durch für thermoplastiche Polycarbonate übliche Mengen an UV-Stabilisierungsmitteln wie beispielsweise substituierte "Benzophenone" oder "Benztriazole", durch Hydrolyseschutzmittel, wie beispielsweise Mono- und vor allem Polycarbodiimide, (vgl. W. Neumann, J. Peter, H, Holtschmidt und W. Kallert, Proceeding of the 4th Rubber Technology Conference London, 22. — 25. Mai 1962, S. 738 — 751) in Mengen von 0,2 — 5 Gew.-%, benzogen auf das Gewicht der Polyäther-Polycarbonate, und durch in der Chemie der thermoplastischen Polyäther und thermoplastischen Polycarbonate bekannte Alterungsschutzmittel.

Zur Modifizierung der erfindungsgemässen Produkte können Substanzen wie beispielsweise Ruß, Kieselgur, Kaolin, Tone, $CaF_2$, $CaCO_3$, Aluminiumoxide sowie übliche Glasfasern in Mengen von 2 bis 40 Gew.-%, bezogen jeweils auf das Gesamtgewicht der Formmasse und anorganische Pigmente sowohl als Füllstoffe als auch als Nucleierungsmittel zugesetzt werden.

Werden flammwidrige Produkte gewünscht, können ca. 5 bis 15 Gew.-%, bezogen jeweils auf das Gewicht der Polyäther-Polycarbonate, in der Chemie der thermoplastischen Polyäther und thermoplastischen Polycarbonate bekannten Flammschutzmittel, wie z.B. Antimontrioxid, Tetrabromphthalsäureanhydrid, Hexabromcyclododecan, Tetrachlor- oder Tetrabrombisphenol-A oder Tris-(2,3-dichlorpropyl)-phosphat zugemischt werden, wobei in den Polycarbonatanteilen der erfindungsgemässen Polycarbonate statistisch eingebaute Tetrachlor- und Tetrabrombisphenole ebenfalls flammwidrige Eigenschaften zeigen.

Weiterhin können in der Chemie der thermoplastischen Polyäther und thermoplastischen Polycarbonate bekannte Verarbeitungshilfsmittel, wie Trennhilfsmittel, in wirksamer Weise verwendet werden.

Die nach dem erfindungsgemässen Verfahren erhaltenen Polyäther-Polycarbonate können mit Vorteil überall dort angewendet werden, wo eine Kombination von Härte und Elastizität, insbesondere von Kälteflexibilität erwünscht ist, z.B. im Karosseriebau, für die Herstellung von Niederdruckreifen für Fahrzeuge, für Ummantelungen von Schläuchen, Platten, Rohren und für flexible Antriebsscheiben.

Die in nachfolgenden Beispielen aufgeführten mittleren Molekulargewichte sind Zahlenmittel $\overline{M}n$ und durch Bestimmung der OH-Zahl ermittelt.

Der im Beispiel A angeführte Staudinger-Index $[\eta]$ wurde in THF bei 25°C gemessen und in

$$\frac{dl}{g}$$

angegeben.

Zu Definition des Staudinger-Index siehe:
H. G. Elias: 'Makromoleküle', Hüthig & Wepf-Verlag, Basel, S. 265.

Die relative Lösungsviskosität $\eta_{rel}$ der Beispiele $C_1$—$C_6$ ist definiert durch die Viskosität von 0,5 g Polyäther-Polycarbonat in 100 ml Methylenchlorid bei 25°C.

Die Reißfestigkeit und die Reißdehnung wurde nach DIN 53 455 bzw. 53 457 gemessen.

Gelchromatographische Untersuchungen wurden im Tetrahydrofuran mit Styragelsäuren (Trennbereich $1{,}5 \times 10^5$ Å, $1 \times 10^5$ Å, $3 \times 10^4$ Å und $2 \times 10^3$ Å) bei Raumtemperatur durchgeführt.

Zur Bestimmung diente die Eichung von Bisphenol A-Polycarbonat. Es werden keine großen Abweichungen im Vergleich zu $\overline{M}w$-Bestimmung nach der Lichtstreumethode festgestellt.

Die Differentialthermoanalyse (DTA) wurde mit dem Gerät "DuPont, Modell 900" durchgeführt. Zur Interpretation der Einfriertemperatur wurde die ungefähre Mitte des Erweichungsbereiches nach der Tangentenmethode und für den Kristallitschmelzpunkt die ungefähre Mitte des endothermen Peaks der Schmelzkurve gewählt.

Beispiel A

1) 2000 Gew.-Teile Polytetrahydrofurandiol mit einem Molekulargewicht $\overline{M}n$ von 2000 und mit einer durch Kurve (1) in Abb. 1 wiedergegebenen GPC-Kurve, 321 Gew.-Teile Diphenylcarbonat, 0,1 Gew.-Teil Natriumphenolat und 0,2 Gew-Teile 2,6-Di-tert.-butyl-p-kresol werden unter Rühren. Stickstoff und einem Vakuum von 6 Torr 1,5 Stunden bei 110°C, 2 Stunden bei 130°C und 2 Stunden bei 150°C erhitzt; während dieser Zeit wird aus dem Reaktionsgemisch Phenol abdestilliert. Falls gewünscht, können anschliessend restliche Spuren Phenol bei 190°C/0,1 Torr im Dünnschichtverdampfer abgetrennt werden. Man erhält ein farbloses, viskoses Oel mit einem Molekulargewicht $\overline{M}n$ von 4200 und einem Staudinger-Index $[\eta]_{THF} = 0{,}24$. Die OH-Zahl beträgt Null. Die GPC-Kurve dieses Produktes ist als Kurve (2) in Abb. 1 wiedergegeben.

Beispiel B1

Herstellung eines Polytetrahydrofurandiol-bis-(bisphenol A)-carbonats, das noch 1 Gew.-% Bisphenol A enthält.

2100 Gew.-Teile Bisphenylcarbonat eines über Carbonat-Gruppen-verlängerten Polytetrahydrofurandiols vom mittleren Molekulargewicht $\overline{M}n$ = 4200, das gemäss Beispiel A hergestellt wurde, 251,1 Gew.-Teile 2,2-Bis-(4-hydroxyphenyl)-propan (Bisphenol A) und 0,3 Gew.-Teile Katalysator (Natriumbisphenolat des Bisphenol A zu Bisphenol A = 1:100) werden unter Rühren und Stickstoffatmosphäre 9 Stunden bei 150°C und 0,3 Torr erhitzt. Während dieser Zeit wird aus dem Reaktionsgemisch Phenol abdestilliert. Das erhaltene Reaktionsprodukt ist ein klares, viskose Ol.

Beispiel B2

Herstellung eines Carbonat-Gruppen-verlängerten Polytetrahydrofurandiol-bis-(bisphenol A)-carbonats, das noch 3,7 Gew.-% Bisphenol A enthält.

320 Gew.-Teile Bisphenylcarbonat eines über Carbonat-Gruppenverlängerten Polytetrahydrofurandiols vom mittleren Molekulargewicht $\overline{M}n$ = 3200, das gemäss Beispiel A hergestellt wurde, 59,4 Gew.-Teile 2,2-Bis.(4-hydroxyphenyl)-propan (Bisphenol A) und 0,01 Gew.-Teile Natriumphenolat werden unter Rühren und Stickstoffatmosphäre zunächst 1 Stunde bei 125°C, danach 4 Stunden bei 150°C und 0,5 Torr unter Abdestillieren von Phenol erhitzt. Das erhaltene Reaktionsprodukt ist ein klares, viskoses Oel.

Beispiel B3

Herstellung eines Carbonat - Gruppen - verlängerten Polypropylenoxiddiol - bis - (bisphenol A)-carbonats, das noch 3 Gew.-% Bisphenol A enthält.

315 Gew.-Teile Bisphenylcarbonat eines über Carbonat-Gruppenverlängerten Polypropylenoxiddiols vom mittleren Molekulargewicht $\overline{M}n$ = 4200, das gemäss Beispiel A hergestellt wurde, 44,5 Gew.-Teile Bisphenol A und 0,05 Gew-Teile Katalysator (Natriumbisphenolat des Bisphenol A zu Bisphenol A = 1:100) werden unter Rühren und Stickstoffatmosphäre eine Stunde bei 125°C, danach 5 Stunden bei 150°C und 0,8 Torr erhitzt. Während dieser Zeit wird aus dem Reaktionsgemisch Phenol abdestilliert. Das erhaltene Produkt ist ein klares, viscoses Oel.

Beispiel B4

Herstellung eines Carbonat-Gruppen-verlängerten Polytetrahydrofurandiol-bis-diphenolcarbonats der Formel Vf, das noch 3,6 Gew.-% 2,2-Bis-(3,5-dimethyl-4-hydroxyphenyl)-propan enthält.

315 Gew.-Teile Bisphenylcarbonat eines über Carbonat-Gruppenverlängerten Polytetrahydrofurandiols vom mittleren Molekulargewicht $\overline{M}n$ = 4200, das gemäss Beispiel A hergestellt wurde, 55,5 Gew.-Teile 2,2-Bis-(3,5-dimethyl-4-hydrophenyl)-propan und 0,25 Gew.-Teile Katalysator (Natriumbisphenolat des Bisphenol A: Bisphenol A = 1:100) werden unter Rühren und Stickstoffatmosphäre zunächst 1 Stunde bei 125°C, danach 4 Stunden bei 150°C und 0,1 Torr unter Abdestillieren von Phenol erhitzt. Man erhält ein klares, viskoses Oel.

Beispiel B5

Herstellung eines Carbonat-Gruppen-verlängerten Polypropylenoxiddiol-bis-diphenolcarbonats der Formel Vf, das noch 2,5 Gew.-Teile 2,2-Bis-(3,5-dimethyl-4-hydroxyphenyl)-propan enthält.

310 Gew.-Teile Bisphenylcarbonat eines über Carbonat-Gruppen verlängerten Polypropylenoxiddiols vom mittleren Molekulargewicht $\overline{M}n$ = 6200, das gemäss Beispiel A hergestellt wurde, 37 Gew.-Teile 2,2-Bis-(3,5-dimethyl-4-hydroxyphenyl)-propan und 0,02 Gew.-Teile Katalysator (Natriumbisphenolat des Bisphenol A: Bisphenol A = 1:100) werden unter Rühren und Stickstoffatmosphäre zunächst eine Stunde bei 125°C, danach 4 Stunden bei 150°C und 0,05 Torr unter Abdestillieren von Phenol erhitzt. Man erhält ein klares, viskoses Oel.

Beispiel C1

Herstellung des Polyäther-Polycarbonats mit 50 Gew.-% Polyätheranteil.

2.264 Gew.-Teile dieses viskosen Oelsaus Beispiel B1, gelöst in 30 Ltr. $CH_2Cl_2$ werden zu einer Lösung von 1545 Gew.-Tln 2,2-Bis-(4-hydroxyphenyl)-propan (Bisphenol A) und 47,2 Gew.-Teilen p-tert.-Butylphenol in 1400 Gew.-Teilen 45 prozentiger NaOH und 30 Litern destilliertem Wasser gegeben.

Innerhalb von 40 Minuten werden bei 20—25°C unter Rühren und Stickstoffatmosphäre 1167 Gew.-Teile Phosgen eingeleitet. Während des Einleitens werden gleichzeitig 1730 Gew.-Teile 45%ige NaOH so zugetropft dass der pH-Wert konstant bei pH 13 bleibt. Nach dem Phosgeneinleiten werden 7,9 Gew.-Teile Triäthylamin zugegeben und 1 Stunde gerührt. Die organische Phase wird abgetrennt, nacheinander mit 2%iger Phosphorsäure und schliesslich mit destilliertem Wasser bis zur Elektrolytfreiheit gewaschen. Nach dem Abtrennen des Wassers kann die organische Phase nach folgenden Verfahren aufgearbeitet werden:

C. 1.1

Durch Abdestillieren des $CH_2Cl_2$ bis zu einer bestimmten Konzentration oder durch Zugabe von Chlorbenzol zur organischen Phase und Abdestillieren des gesamten Methylenchlorids wird eine hochprozentige (etwa 30—40 Gew.-%) Polymerlösung erhalten. Durch anschliessendes langsames Verdampfen des restlichen Methylenchlorids oder des Chlorbenzols geliert das Polyäther-Polycarbonat und kann zu einem Pulver-Korn-Gemisch weiter aufgearbeitet werden. Das erhaltene Polyäther-Polycarbonat wird 48 Stunden bei 50°C und 24 Stunden bei 100°C getrocknet.

C. 1.2

Durch Abdestillieren des Lösungsmittels, Trocknen im Vakuumtrockenschrank bei etwa 80—110°C und 15 Torr und anschliessendes Mahlen wird ein feinteiliges Festprodukt erhalten.

C. 1.3

Durch Fällen des Polyäther-Polycarbonats aus der organischen Phase mit beispielsweise Methanol, Äthanol, Aceton, aliphatischen Kohlenwasserstoffen und cycloaliphatischen Kohlenwasserstoffen und nachfolgender Trocknung im Vakuumtrockenschrank bei 80—110°C und 15 Torr.

C. 1.4

Durch Einengen der organischen Phase im Eindampfextruder und anschliessende Extrusion bei etwa 160—240°C unter den für die Polycarbonatextrusion bekannten Bedingungen.

Die rel. Viskosität des nach C. 1.1 — C. 1.4 erhaltenen Polyäther-Polycarbonats beträgt $\eta_{rel}$ = 1.52 (gemessen in $CH_2Cl_2$ bei 25°C und c = 5 g/l). Nach gelchromatographischer Bestimmung zeigt das Polyäther-Polycarbonat ein Maximum bei 40.000. Es hat 50 Gew.-% Polyäther und 50 Gew.-% Polycarbonatanteil. Einige mechanische Eigenschaften einer aus Methylenchlorid gegossenen Folie sind: Reißfestigkeit 45,9 (MPA) (gemessen nach DIN 53 455), Reißdehnung 483% (gemessen nach DIN 53 455).

Das granulierte Polyäther-Polycarbonat zeigt nach Differtialthermoanalyse eine Glasübergangstemperatur des Polyätheranteils von —75°C, eine Glasübergangstemperatur des Polycarbonats von 145°C und einen Kristallitschmelzpunkt des Polycarbonatanteils von ca. 215°C.

### Beispiel C2

Herstellung eines Polyäther-Polycarbonats mit 60 Gew.-% Polyätheranteil.

134.3 Gew.-Teile des viskosen Oels als Beispiel B1, gelöst in 1725 Gew.-Teilen Methylenchlorid werden zu einer Lösung von 58.2 Gew.-Teilen 2,2-Bis-(4-hydroxyphenyl)-propan (Bisphenol A) und 1.42 Gew.-Teilen p-tert.-Butylphenol in 1300 Gew.-Teilen dest. Wasser und 56 Gew.-Teilen 45%ige Natronlauge gegeben. Innerhalb 45 Min. werden 85.6 Gew.-Teile Phosgen unter Rühren und Stickstoffatmosphäre eingeleitet, während gleichzeitig 95 Gew.-Teile 45%ige Natronlauge zur Konstanthaltung von pH 13 zugetropft werden. Nach dem Phosgeneinleiten werden 0,32 Gew.-Teile Triäthylamin zugegeben. Der Ansatz wird zähflüssiger. Nach 1 Stunde trennt man die organische Phase ab und gewinnt das Polyäther-Polycarbonat wie im Beispiel C1 (Aufarbeitung $C_{1,1}$—$C_{1,4}$) beschrieben.

Die rel. Viskosität des Polyäther-Polycarbonats beträgt $\eta_{rel}$ = 1,62 (in $CH_2Cl_2$).

### Beispiel C3

Herstellung eines Polyäther-Polycarbonats mit 50 Gew.-% Polyätheranteil.

120.6 Gew.-Teile des viskosen Oels aus Beispiel B2, gelöst in 1725 Gew.-Teilen Methylenchlorid werden zu einer Lösung von 70 Gew.-Teilen 2,2-Bis-(4-hydroxyphenyl)-propan (Bisphenol A) und 1.77 Gew.-Teilen p-tert.-Butylphenol in 1300 Gew.-Teilen dest. Wasser und 70 Gew.-Teilen 45%iger Natronlauge gegeben. Innerhalb 45 Min. werden 58.3 Gew.-Teile Phosgen unter Rühren und Stickstoffatmosphäre eingeleitet, während gleichzeitig 135 Gew.-Teile 45%iger Natronlauge zur Konstanthaltung von pH 13 zugetropft werden. Nach dem Phosgeneinleiten werden 0,4 Gew.-Teile Triäthylamin zugegeben. Der Ansatz wird zähflüssiger. Nach 1 Stunde trennt man die organische Phase ab und gewinnt das Polyäther-Polycarbonat wie im Beispiel C1 (Aufarbeitung $C_{1,1}$—$C_{1,4}$) beschrieben.

Die rel. Viskosität des Polyäther-Polycarbonats beträgt $\eta_{rel}$ = 1.54 (in $CH_2Cl_2$).

Beispiel C4

Herstellung eines Polyäther-Polycarbonats mit 50 Gew.-% Polyätheranteil.

115,3 Gew.-Teile des viskosen Oels aus Beispiel B3, gelöst in 1725 Gew.-Teilen Methylenchlorid werden zu einer Lösung von 65 Gew.-Teilen 2,2-Bis-(4-hydroxyphenyl)-propan (Bisphenol A) und 1300 Gew.-Teilen dest. Wasser und 70 Gew.-Teilen 45%iger Natronlauge gegeben. Innerhalb 45 Min. werden 58.3 Gew.-Teile Phosgen unter Rühren und Stickstoffatmosphäre eingeleteit, während gleichzeitig 135 Gew.-Teile 45%iger Natronlauge zur Konstanthaltung von pH 13 zugetropft werden. Nach dem Phosgeneinleiten werden 0,4 Gew.-Teile Triäthylamin zugegeben. Der Ansatz wird zähflüssiger. Nach 1 Stunde trennt man die organische Phase ab und gewinnt das Polyäther-Polycarbonat wie im Beispiel C1 (Aufarbeitung $C_{1.1}$—$C_{1.4}$) beschrieben.

Die rel. Viskosität des Polyäther-Polycarbonats beträgt $\eta_{rel} = 2.05$ (in $CH_2Cl_2$).

Das granulierte Polyäther-Polycarbonat zeigt nach Differtial Thermoanalyse eine Glasübergangstemperatur des Polyätheranteils von −57°C eine Glasübergangstemperatur des Polycarbonats von 145°C und einen Kristallitschmelzpunkt des Polycarbonatanteils von ca. 195°C.

Beispiel C5

Herstellung eines Polyäther-Polycarbonats aus 2,2-Bis-(3,5-dimethyl-4-hydroxyphenyl)-propan mit 50 Gew.-% Polyätheranteil.

119 Gew.-Teile des viskosen Oels aus Beispiel B4 und 0,6 Gew.-Teile Tributylamin (= 1 Mol-% pro Mol Bisphenoleinheiten), gelöst in 1725 Gew.-Teilen Methylenchlorid, werden zu einer Lösung von 73,2 Gew.-Teilen 2,2-Bis-(3,5-dimethyl-4-hydroxyphenyl)-propan ir 57,3 Gew Teilen 45%iger Natronlauge und 1300 Gew.-Teilen dest. Wasser gegeben. Innerhalb 30 Min. werden unter Rühren und Stickstoffatmosphäre 95,6 Gew.-Teile Phosgen eingeleitet, während gleichzeitig 235 Gew.-Teile 45%iger Natronlauge zur Konstanthaltung von pH 13 zugetropft werden. Nach dem Phosgeneinleiten werden zur vollständigen Kondensation 5,4 Gew.-Teile Tributylamin (= 9 Mol-% pro Mol Bisphenoleinheiten) zugegeben. Der Ansatz wird zähflüssiger. Nach 3 Stunden trennt man die organische Phase ab und gewinnt das Polyäther-Polycarbonat wie in Beispiel C1 (Aufarbeitung C 1.1) beschrieben.

Die rel. Viskosität des Polyäther-Polycarbonats beträgt $\eta_{rel} = 1,63$ (in $CH_2Cl_2$).

Beispiel C6

Herstellung eines Polyäther-Polycarbonats aus 2,2-Bis-(3,5-dimethyl-4-hydroxyphenyl)-propan mit 50 Gew.-% Polyätheranteil.

112,8 Gew.-Teile des viskosen Oels aus Beispiel B5 und 0,6 Gew.-Teile Tributylamin (=1 Mol-% pro Mol Bisphenoleinheiten), gelöst in 1725 Gew.-Teilen Methylenchlorid, werden in einer Lösung von 79,3 Gew.-Teilen 2,2-Bis-(3,5-dimethyl-4-hydroxyphenyl)-propan in 57,3 Gew.-Teilen 45%iger Natronlauge und 1300 Gew.-Teilen dest. Wasser gegeben. Innerhalb 30 Min. werden unter Rühren und Stickstoffatmosphäre 95,6 Gew.-Teile Phosgen eingeleitet, während gleichzeig 235 Gew.-Teile 45%iger Natronlauge zur Konstanthaltung von pH 13 zugetropft werden. Nach dem Phosgeneinleiten werden zur vollständigen Kondensation 5,4 Gew.-Teile Tributylamine (=9 Mol-% pro Mol Bisphenoleinheiten) zugegeben. Der Ansatz wird zähflüssiger. Nach 3 Stunden trennt man die organische Phase ab und gewinnt das Polyäther-Polycarbonat wie in Beispiel C1 (Aufarbeitung C 1.1) beschrieben.

Die rel. Viskosität des Polyäther-Polycarbonats beträgt $\eta_{rel} = 1,66$ (in $CH_2Cl_2$).

**Patentsprüche**

1. Verfahren zur Herstellung von über Carbonat-Gruppen-verlängerten Polyalkylenoxiddiol-bis-diphenol-carbonaten, dadurch gekennzeichnet, dass man Polyalkylenoxiddiole mit Molekulargewichten $\overline{M}n$ (Zahlenmittel) über 135, mit Kohlensäure-bis-arylestern bei Temperaturen zwischen 100°C und 200°C im Vakuum unterhalb 35 Torr in Gegenwart von Katalysatoren erhitzt, wobei pro OH-Gruppe des Polyalkylenoxiddiols weniger als 1 Mol Kohlensäure-bis-arylester eingesetzt werden und die entstehende Hydroxyarylverbindung abdestilliert wird, und die erhaltenen Polyalkylenoxiddiol-bis-arylcarbonate mit Diphenolen bei Temperaturen zwischen 100°C und 200°C im Vakuum unterhalb 35 Torr in Gegenwart von Katalysatoren erhitzt, wobei für eine Kohlensäurearylestergruppe des über Carbonat-Gruppen-verlängerten Polyalkylenoxiddiol-bis-arylcarbonats mehr als 1 Mohl Diphenol eingesetzt werden und die entstehende Hydroxyarylverbindung abdestilliert wird.

2. Carbonat-Gruppen-verlängerte Polyalkylenoxiddiol-bis-diphenol-carbonate erhalten gemäss Verfahren des Anspruchs 1.

3. Carbonat-Gruppen-verlängerte Polyalkylenoxiddiol-bis-diphenol-carbonate der Formel V

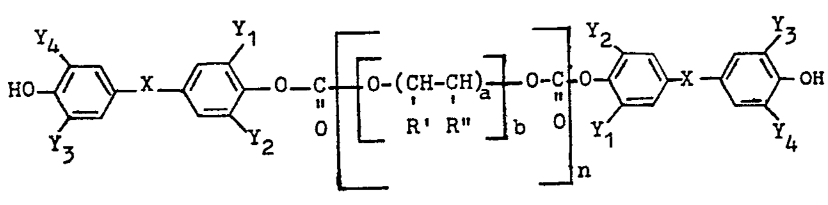 ,

worin

R′, R″ unabhängig voneinander H oder $C_1$—$C_4$-Alkyl sind

n eine ganze Zahl von 2 bis 20, vorzugsweise 2—10, ist

a eine ganze Zahl von 1 bis 6 ist,

b eine ganze Zahl von 3 bis 350 ist,

X $—CH_2—$, 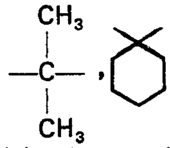 , O, S oder $SO_2$ ist und

$Y_1$ und $Y_4$ gleich oder verschieden sind und Wasserstoff oder Halogen bedeuten, erhalten gemäss Verfahren des Anspruchs 1.

4. Carbonat-Gruppen-verlängerte Polyalkylenoxiddiol-bis-diphenolcarbonate gemäß Anspruch 3 der Formel Vf

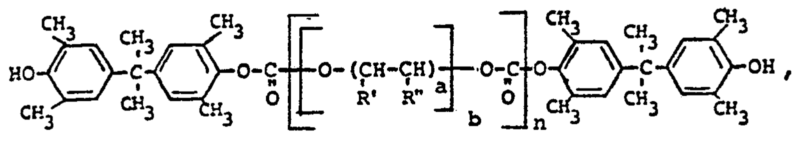

worin

R′, R″, n, a und b die in Anspruch 3 gennante Bedeutung haben.

5. Carbonat-Gruppen-verlängerte Polyalkylenoxiddiol-bis-diphenolcarbonate gemäß Anspruch 3 der Formel Vg

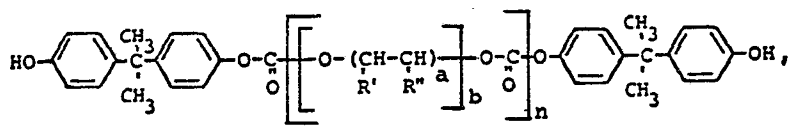

worin R′, R″, n, a und b die in Anspruch 4 genannte Bedeutung haben.

6. Carbonat-Gruppen-verlängerte Polyalkylenoxiddiol-bis-diphenolcarbonate gemäß Anspruch 3 der Formel Vh

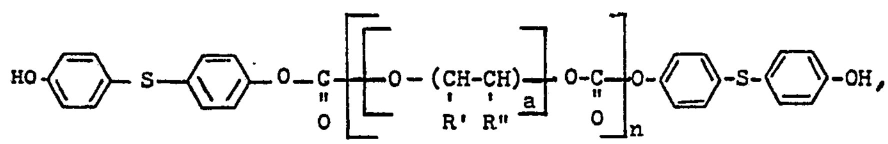

worin R′, R″, n, a, und b die in Anspruch 3 genannte Bedeutung haben.

7. Verwendung der Polyalkylenoxiddiol-bis-diphenol-carbonate de Ansprüche 2 bis 6 zur Herstellung von Polyäther-Polycarbonaten.

8. Verfahren zur Herstellung von Polyäther-Polycarbonaten, dadurch gekennzeichnet, dass man die Polyalkylenoxiddiol-bis-diphenol-carbonate der Ansprüche 2 bis 6 mit anderen Diphenolen und mit Phosgen in einem Flüssigkeitsgemisch aus inertem organischen Lössungsmittel und alkalischer wäßriger Lösung bei Temperaturen zwischen 0°C und 80°C bei einem pH-Wert zwischen 9 und 14 umsetzt, und nach der Phosgenzugabe durch Zusatz von 0,2 Mol-% bis 10 Mol-% an tertiärem aliphatischen Amin, bezogen auf Molmenge an Diphenol, polykondensiert, wobei das Gewichtsverhältnis von Polyalkylenoxiddiol-bis-diphenol-carbonat zu anderem Diphenol von dem Polycarbonatanteil und dem Polyätheranteil der Polyäther-Polycarbonate bestimmt wird.

9. Verfahren gemäss Anspruch 8 dadruch gekennzeichnet, dass als andere Diphenole solche der Formel IV

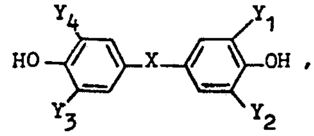

umgesetzt werden, worin

X $—CH_2—$, 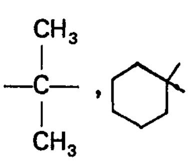 , O, S, oder $SO_2$ bedeuten und

$Y_1$ bis $Y_4$ gleich oder verschieden sind und Wasserstoff oder Halogen bedeuten.

10. Polyäther-Polycarbonate erhalten gemäss Ansprüche 8 und 9.

11. Polyäther-Polycarbonate, dadurch gekennzeichnet, dass sie etwa aus 30 bis 95 Gew.-% an aromatischen Polycarbonatstruktureinheiten der Formel IVa

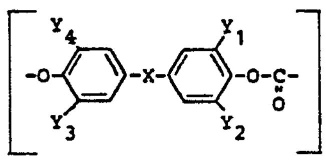,

worin

X und $Y_1$ bis $Y_4$ die im Anspruch 9 genannte Bedeutung haben und etwa aus 70 bis 5 Gew.-% an über Carbonat-Gruppen verlängerten Polyalkylenoxiddiol-Blockeinheiten der Formel VII

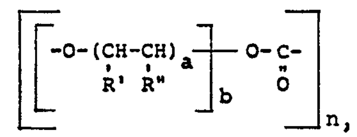,

worin

R′, R″ unabhängig voneinander H oder $C_1$—$C_4$-Alkyl sind,

a eine ganze Zahl von 1 bis 6 ist und b eine ganze Zahl von 3 bis 350 ist, und

n eine ganze Zahl von 2 bis 20, vorzugsweise 2 bis 10, bedeutet, bestehen.

**Revendications**

1. Procédé de production de carbonates bis-diphénoliques de diols d'oxydes polyalkyléniques allongés par des groupes carbonate, caractérisé en ce qu'on chauffe des diols d'oxydes polyalkyléniques de poids moléculaires $\overline{M}_n$ (moyenne en nombre) supérieurs à 135, avec des esters bis-aryliques d'acide carbonique à des températures comprises entre 100 et 200°C sous un vide inférieur à 35 mm de mercure, en présence de catalyseurs, moins d'une mole d'ester bis-arylique d'acide carbonique par groupe OH du diol d'oxyde polyalkylénique étant utilisée et le composé hydroxyarylique formé étant chassé par distillation, et on chauffe les carbonates bis-aryliques de diols d'oxydes polyalkyléniques obtenus avec des diphénols à des températures comprises entre 100 et 200°C sous un vide inférieur à 35 mm de mercure en présence de catalyseurs, plus d'une mole de diphénol étant utilisée pour un groupe ester arylique d'acide carbonique du carbonate bis-arylique de diol d'oxyde polyalkylénique allongé par des groupes carbonate et le composé hydroxyarylique formé étant chassé par distillation.

2. Des carbonates bis-diphénoliques de diols d'oxydes polyalkyléniques allongés par des groupes carbonate, obtenus conformément au procédé de l'exemple 1.

3. Des carbonates bis-diphénoliques de diols d'oxydes polyalkyléniques allongés par des groupes carbonate de formule V:

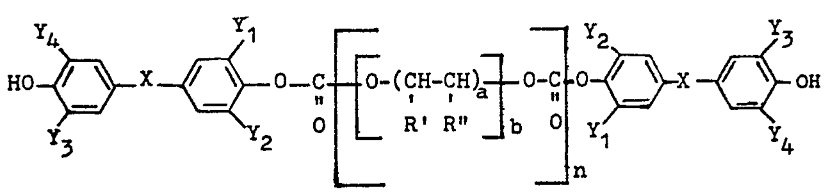,

(dans laquelle)

R′, R″ représentent, indépendamment l'un de l'autre, H ou un groupe alkyle en $C_1$ à $C_4$,

*n* est un nombre entier ayant une valeur de 2 à 20, de préférence de 2 à 10,

*a* est un nombre entier ayant une valeur de 1 à 6

*b* est un nombre entier ayant une valeur de 3 à 350,

X représente: —$CH_2$—, 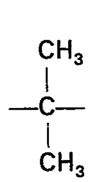, 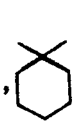, O, S ou $SO_2$ et

$Y_1$ et $Y_4$ sont égaux ou différents et représentent de l'hydrogène ou un halogène) obtenus conformément au procédé de la revendication 1.

4. Des carbonates bis-diphénoliques de diols d'oxydes polyalkyléniques allongés par des groupes carbonate suivant la revendication 3, de formule Vf:

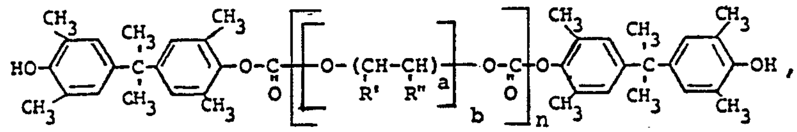

dans laquelle

R', R'', *n, a* et *b* ont les définitions données dans la revendication 3.

5. Des carbonates bis-diphénoliques de diols d'oxydes polyalkyléniques allongés par des groupes carbonate suivant la revendication 3, de formule Vg:

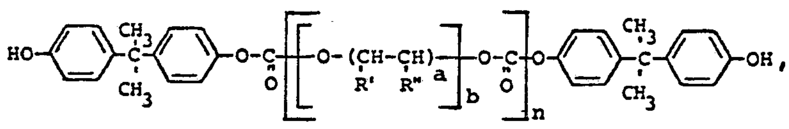

dans laquelle

R', R'', *n, a* et *b* ont les définitions données dans la revendication 4.

6. Des carbonates bis-diphénoliques de diols d'oxydes polyalkyléniques allongés par des groupes carbonate suivant la revendication 3, de formule Vh:

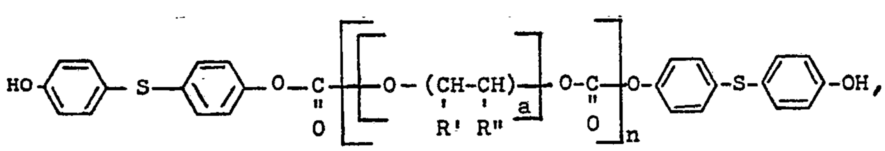

dans laquelle

R', R'', *n a* et *b* ont les définitions données dans la revendication 3.

7. Utilisation des carbonates bis-diphénoliques de diols d'oxydes polyalkyléniques suivant les revendications 2 à 6 pour la production de polyéther-polycarbonates.

8. Procédé de production de polyéther-polycarbonates, caractérisé en ce qu'on fait réagir les carbonates bis-diphénoliques de diols d'oxydes polyalkyléniques des revendications 2 à 6 avec d'autres diphénols et avec le phosgène dans un mélange liquide formé d'un solvant organique inerte et d'une solution aqueuse alcaline à des temperatures comprises entre 0 et 80°C à un pH de 9 à 14 et, après l'addition de phosgène, on effectue une polycondensation par addition de 0,2 à 10 moles % d'une amine aliphatique tertiaire, par rapport à la quantité molaire de diphénol, le rapport en poids du carbonate bis-diphénolique de diols d'oxydes polyalkyléniques à l'autre diphénol étant déterminé par la fraction de polycarbonate et la fraction de polyéther des polyéther-polycarbonates.

9. Procédé suivant la revendication 8, caractérisé en ce qu'on fait réagir, comme autres diphénols, des diphénols de formule IV:

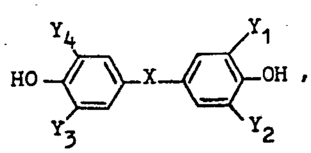

dans laquelle

X représente: $-CH_2-$, 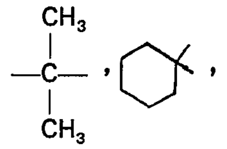 , O, S ou $SO_2$ et

Y, à $Y_4$ sont égaux ou différents et représentent de l'hydrogène ou un halogène.

10. Des polyéther-polycarbonates obtenus conformément aux revendications 8 et 9.

11. Polyéther-polycarbonates, caractérisés en ce qu'ils sont constitués par environ 30 à 95% en poids de motifs structuraux polycarbonate aromatiques de formule IVa:

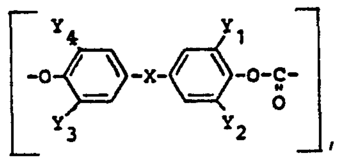

(dans laquelle

X et $Y_1$ à $Y_4$ ont les définitions données dans la revendication 9) et environ 70 à 5% en poids de motifs séquencés de diols d'oxydes polyalkyléniques allongés par des groupes carbonate, de formule VII:

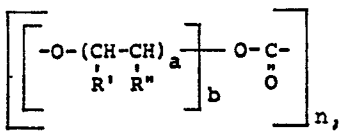

dans laquelle

R' et R'' représentent, indépendamment l'une de l'autre, H ou un groupe alkyle en $C_1$ à $C_4$,
*a* est un nombre entier ayant une valeur de l à 6,
*b* est un nombre entier ayant une valeur de 3 à 350 et
*n* est un nombre entier ayant une valeur de 2 à 20, de préférence de 2 à 10.

**Claims**

1. A process for the preparation of polyalkylene oxide-diol bis-diphenol carbonates, lengthened via carbonate groups, characterised in that polyalkylene oxide-diols having molecular weights $\overline{M}n$ (number-average) of over 135 are heated with carbonic acid bis-aryl esters at temperatures between 100°C and 200°C in vacuo below 35 mm Hg in the presence of catalysts, less than 1 mol of carbonic acid bis aryl ester being employed per OH group of the polyalkylene oxide-diol and the resulting hydroxy-aryl compound is distilled off and the resulting polyalkylene oxide-diol bis-aryl carbonates are then heated with diphenols at temperatures between 100° and 200°C in vacuo below 35 mm Hg in the presence of catalysts, more than 1 mol of diphenol being employed for one carbonic acid aryl ester group of the polyalkylene oxide-diol bis-aryl carbonate lengthened via carbonate groups and the resulting hydroxy-aryl compound is distilled off.

2. Polyalkylene oxide-diol bis-diphenol carbonates, lengthened via carbonate groups, obtained according to the process of claim 1.

3. Polyalkylene oxide-diol bis-diphenol carbonates, lengthened via carbonate groups, of the formula V

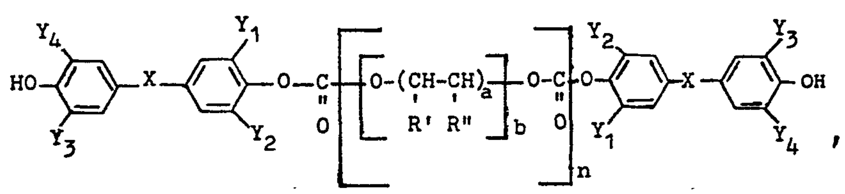

wherein

R' and R'' independently of one another are H or $C_1$ to $C_4$ alkyl,
n is an integer from 2 to 20, preferably 2—10,
a is an integer of from 1 to 6, and
b is an integer of from 3 to 350,

X is —$CH_2$—, 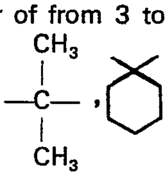, O, S or $SO_2$, and

$Y_1$ and $Y_4$ are identical or different and denote hydrogen or halogen, obtained according to the process of claim 1.

4. Polyalkylene oxide-diol bis-diphenol carbonates, lengthened via carbonate groups, according to claim 3, of the formula Vf

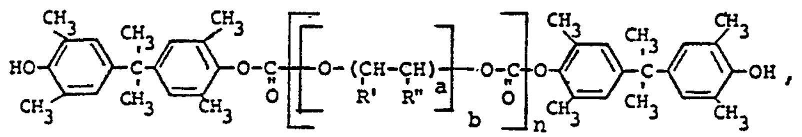

wherein

R′, R″, n, a and b have the meaning given in claim 3.

5. Polyalkylene oxide-diol bis-diphenol carbonates, lengthened via carbonate groups, according to claim 3, of the formula Vg

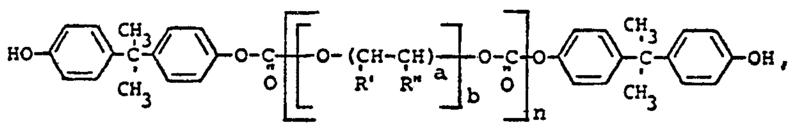

wherein

R′, R″, n, a and b have the meaning given in claim 4.

6. Polyalkylene oxide-diol bis-diphenol carbonates, lengthened via carbonate groups, according to claim 3, of the formula Vh

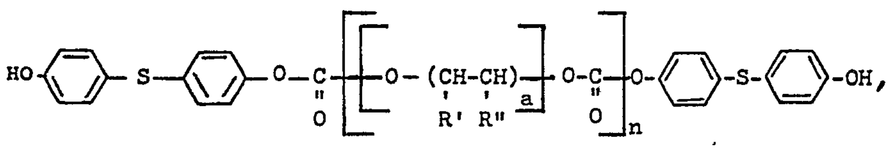

wherein

R′, R″, n, a and b have the meaning given in claim 4.

7. The use of the polyalkylene oxide-diol bis-diphenol carbonates of claims 2 to 6 for the preparation of polyether/polycarbonates.

8. A process for the preparation of polyether/polycarbonates, characterised in that the polyalkylene oxide-diol bis-diphenol carbonates of claims 2 to 6 are reacted with other diphenols and with phosgene in a liquid mixture of an inert organic solvent and an alkaline aqueous solution, at temperatures between 0°C and 80°C at a pH value between 9 and 14, and after the addition of phosgene, polycondensation is carried out by adding from 0.2 mol % to 10 mol %, relative to the molar amount of diphenol, of a tertiary aliphatic amine, the weight ratio of polyalkylene oxide-diol bis-diphenol carbonate to the other diphenol being determined by the proportion of polycarbonate and the proportion of polyether of the polyether/polycarbonates.

9. A process according to claim 8, characterised in that as the other diphenols those of the formula IV

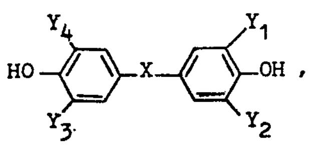

are reacted, wherein

X denotes $—CH_2—$, 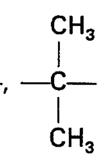 , 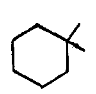 , O, S or $SO_2$ and

$Y_1$ to $Y_4$ are identical or different and denote hydrogen or halogen.

10. Polyether/polycarbonates obtained according to claims 8 and 9.

11. Polyether/polycarbonates characterised in that they consist of about 30 to 95% by weight of aromatic polycarbonate structural units of the formula IVa

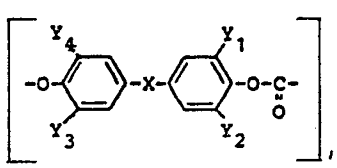

wherein

X and $Y_1$ to $Y_4$ have the meaning given in claim 9 and of about 70 to 5% by weight of polyalkylene oxide-diol block units, lengthened via carbonate groups, of the formula VII

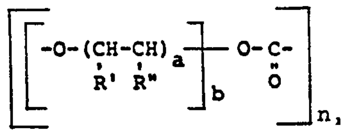

wherein

R', R'' independently of one another are H or $C_1$ to $C_4$ alkyl,

a is an integer from 1 to 6 and b is an integer from 3 to 350, and

n is an integer from 2 to 20, preferably 2 to 10.

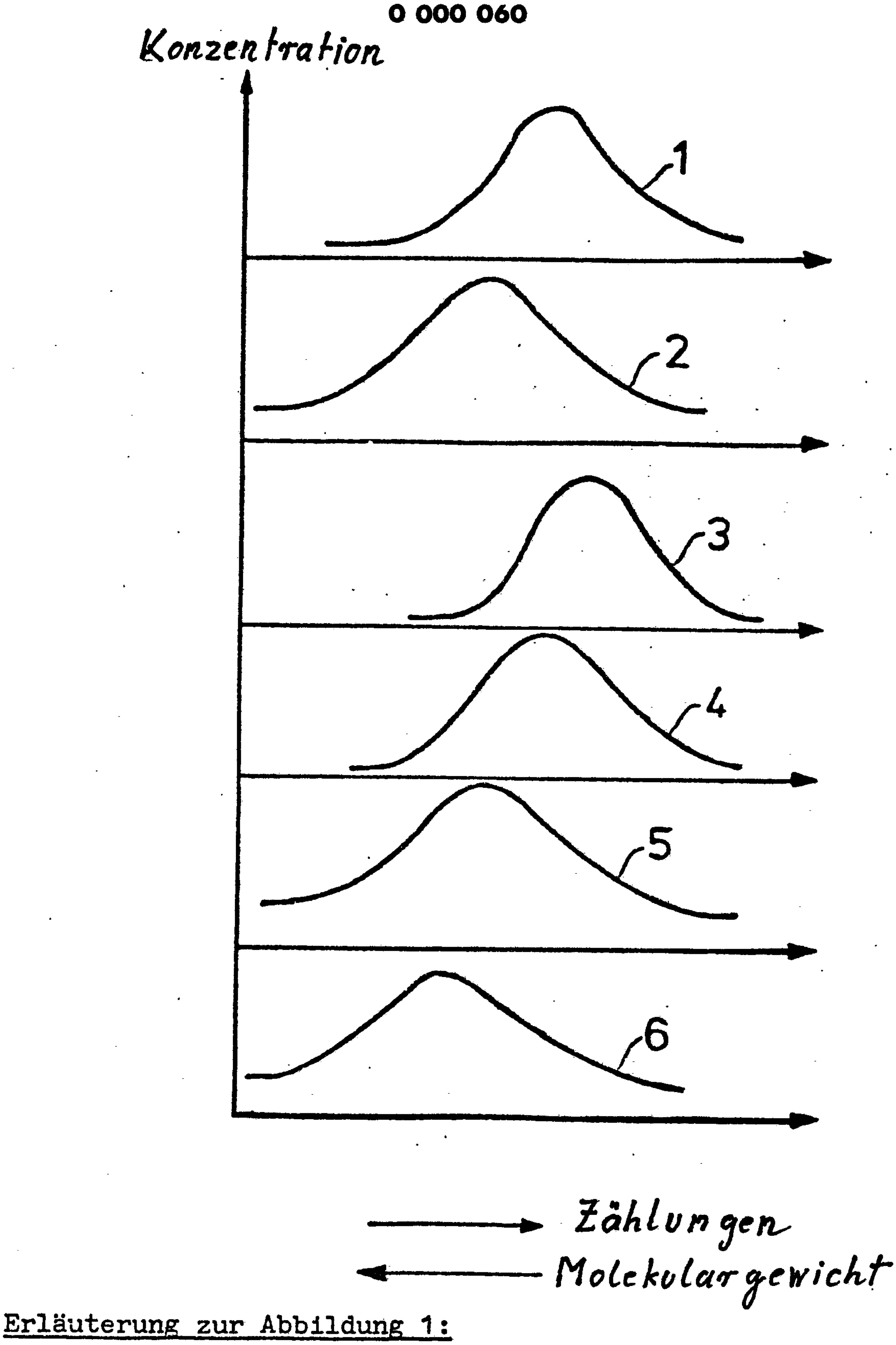


Erläuterung zur Abbildung 1:

GPC-Kurven einiger Polyalkylenoxiddiole sowie die GPC-Kurven nach ihrer Verlängerung über -OCOO-Gruppen und Veresterung der endständigen OH-Gruppen mit Diphenylcarbonat.